# EUROPÄISCHE PATENTSCHRIFT

(11) **EP 1 272 784 B1**
(45) Veröffentlichungstag und Bekanntmachung des Hinweises auf die Patenterteilung: **10.08.2005**
(21) Anmeldenummer: 01944997.4
(22) Anmeldetag: 06.04.2001
(51) Int. Cl.: F16K 49/00

(54) **STOPFBUCHSE FÜR EIN VENTIL**
STUFFING BOX FOR A VALVE
PRESSE-ETOUPE POUR UNE SOUPAPE

(30) Priorität: 13.04.2000 DE 20006789 U; 21.09.2000 DE 20016361 U
(43) Veröffentlichungstag der Anmeldung: 08.01.2003
(73) Patentinhaber: Xomox International GmbH & Co., 88131 Lindau (DE)
(72) Erfinder: GONSIOR, Wolfgang, 88131 Bodolz (DE)
(74) Vertreter: Schmitt, Meinrad, Dipl.-Ing.
(86) Internationale Anmeldenummer: PCT/EP2001/003963
(87) Internationale Veröffentlichungsnummer: WO 2001/079735

(56) Entgegenhaltungen:
- GB-A- 2 125 940
- GB-A- 2 135 027
- US-A- 2 029 777

## Beschreibung

Die Erfindung bezieht sich auf ein Ventil mit einer Dichtung gemäß den im Oberbegriff des Anspruchs 1 an gegebenen Merkmalen.

Aus der GB-A-2 135 027 ist ein derartiges Ventil bekannt, welches zwischen einem Gehäuse und einem axial verschiebbaren Kolben eine Dichtung mit zwei 0-Ringen und einem Einsatzkörper enthält. Axial beabstandet zur Dichtung ist eine Heizeinrichtung mit einem flexiblen Balg vorgesehen, welcher den Kolben umgibt. Zwischen dem Balg und der Außenfläche des Kolbens ist eine Ringkammer für den Wärmeaustausch vorhanden, wobei zur Zuführung bzw. Ableitung eines Heizmediums im Gehäuse Bohrungen vorhanden sind, welche im Vergleich zu der genannten Ringkammer erheblich kleinere Querschnittsflächen aufweisen. In einer weiteren Ausführungsform erfolgt die Zuführung bzw. Ableitung des Heizmediums durch eine zentrale Bohrung im Kolben sowie durch ein koaxial in der zentralen Bohrung angeordnetes Rohr.

Ferner ist aus der US-A- 4 886 241 ein Ventil mit einer als Stopfbuchse ausgebildeten Dichtung bekannt, welche zwischen dem Gehäuse und dem mit dem Ventilkörper verbundenen und im Gehäuse axial verschiebbar oder drehbar gelagerten Kolben angeordnet ist. In Ventilen für Medien mit einem hohen Schmelzpunkt, wobei nahe am Schmelzpunkt gearbeitet wird, besteht die Gefahr von Beschädigungen der Stopfbuchse durch "gefrierendes" Medium, infolge der Klebeeigenschaften des Mediums in Temperaturbeieichen unterhalb des Schmelzpunktes. Grundsätzlich kann diesen Schwierigkeiten durch Beheizen des Gehäuses entgegen gewirkt werden, doch ist der hierfür erforderliche Aufwand bisher recht erheblich.

Hiervon ausgehend liegt der Erfindung die Aufgabe zugrunde, das Ventil der genannten Art mit geringem konstruktiven Aufwand dahingehend weiterzubilden, daß bei Ausbildung der Dichtung als Stopfbuchse deren Material zuverlässig im Flüssigbereich des Mediums arbeitet und / oder der Gefrierpunkt vom Stopfbuchsmaterial ferngehalten wird. Die Temperatur der Stopfbuchse soll mit hoher Funktionssicherheit und bei einfacher Konstruktion im Flüssigbereich oberhalb des Schmelzpunktes des das Ventil durchströmbaren Mediums liegen.

Die Lösung dieser Aufgabe erfolgt gemäß dem im Anspruch 1 angegebenen Merkmalen.

Das vorgeschlagene Ventil mit einer Stopfbuchsdichtung zeichnet sich durch eine funktionssichere Konstruktion aus und gewährleistet mit hoher Sicherheit, daß die Temperatur der Stopfbuchse immer im Flüssigbereich oberhalb des Schmelzpunktes des Mediums liegt. Das Gehäuse enthält im Bereich der Stopfbuchse eine Heizeinrichtung, deren axiale Länge um einen vorgegebenen Betrag größer ist als die Länge der Stopfbuchse, wobei die Heizeinrichtung zumindest an einem Ende, zweckmäßig an beiden Enden, über das bzw. die Stopfbuchsenenden in einem vorgegebenen Bereich hinausragt. In vorteilhafter Weise ragt die Heizeinrichtung in einem Bereich von 30 bis 60 mm über das Stopfbuchsenende hinaus. Die Heizeinrichtung enthält in vorteilhafter Weise einen das Gehäuse außen umgebenden Heizmantel, wobei zwischen dem Gehäuse und dem Heizmantel ein Zwischenraum für ein Heizmedium, wie insbesondere eine beheizbare Flüssigkeit vorhanden ist. Alternativ kann die Heizeinrichtung im Rahmen der Erfindung von einem Heizmedium durchströmbare Rohre oder eine elektrische Heizwicklung oder dergleichen enthalten, welche insbesondere auf der Außenfläche des Gehäuses im Bereich der Stopfbuchse angeordnet sind.

Ferner ist in vorteilhafter Weise der Kolben im Bereich der Stopfbuchse und einer axial an die Stopfbuchse anschließenden Lagerbuchse mit einem gleichbleibenden Durchmesser ausgebildet, wobei Absätze, Ringschultern oder dergleichen dort nicht vorhanden sind. Die zur Kolbenführung vorgesehene Lagerbuchse ist in besonders zweckmäßiger Weise mit sehr geringer Toleranz einerseits bezüglich des Gehäuses und andererseits bezüglich des Kolbens ausgebildet. Dies ist insbesondere bei sensiblen Medien von Bedeutung, welche infolge der Temperatur und / oder Verweilzeit eine Mediumänderung erfahren, zumal die gewählte Toleranz bei sensiblen Medien die Qualität beeinflußt. lm Hinblick auf die Toleranzen, welche für die geforderte Mediumqualität benötigt werden, weist das Material der Lagerbuchse erfindungsgemäß zumindest näherungsweise die gleiche thermische Ausdehnung auf wie der Werkstoff des Gehäuses und / oder des Kolbens. Darüber hinaus ist in vorteilhafter Weise die Kolbenführung wesentlich härter ausgebildet als der Gehäuse- und / oder Kolbenwerkstoff, um ein "Fressen" in der Kolbenführung zu vermeiden. Im Rahmen der Erfindung liegen die genannten Toleranzen bevorzugt im Bereich von 0,01 mm bis 0,2 mm, vorzugsweise im Bereich von 0,05 mm.

Weiterbildungen und besondere Ausgestaltungen der Erfindung sind in den Unteransprüchen sowie der nachfolgenden Beschreibung eines besonderen Ausführungsbeispiels angegeben.

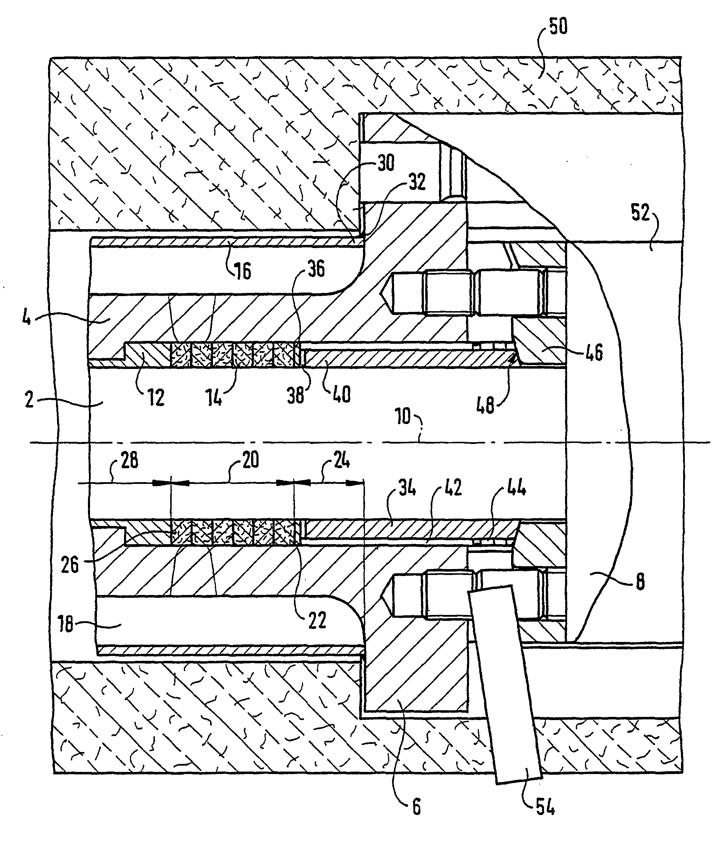

In der Zeichnung ist das Ventil teilweise in einer axialen Schnittebene dargestellt, und zwar im Bereich der Durchführung eines Kolbens 2 durch ein Gehäuse 4, welches einen Trägerflansch 6 enthält. Der Kolben 2 und ein mit diesem verbundener Ventilkörper 8, welcher beispielsweise als eine Absperr- und / oder Regelklappe ausgebildet ist, sind um eine Längsachse 10 axial verschiebbar oder drehbar gelagert, wobei zwischen der zylindrischen Innenfläche des Gehäuses 4 und der Außenfläche des Kolbens 2 eine Lagerbuchse 12 vorgesehen ist. Axial anschließend an die Lagerbuchse 12 ist eine Stopfbuchse 14 bzw. Stopfbuchsenpackung mit einer Anzahl von Dichtungsringen vorgesehen. Der Kolben 2 weist zumindest im Bereich der Stopfbuchse 14, bevorzugt auch im Bereich der Lagerbuchse 12, einen in axialer Richtung gleichbleibenden Außendurchmesser auf. Das Material der Stopfbuchse bzw. deren Ringe ist unter Berücksichtigung der thermischen und der mechanischen Belastung gewählt. Die Stopfbuchse ist dahingehend ausgelegt, daß gleitendes und Festigkeit verleihendes Dichtungsmaterial kombiniert sind, wobei entsprechend den mit dem Ventil zu beherrschenden Temperaturen Dichtungsmaterialien mit und / oder ohne Gewebeeinlage zum Einsatz gelangen. Durch die Anzahl der Dichtungsringe erfolgt die Anpassung an den jeweils mit dem Ventil zu beherrschenden Druck. Die Kolbenführung bzw. Lagerbuchse 12 ist mit sehr geringer Toleranz einerseits zum Kolben 2 und andererseits im Gehäuse 4 gefertigt, wobei die Toleranzen insbesondere im Bereich von 0,01 mm bis 0,2 mm, vorzugsweise im Bereich von 0,05 mm, liegen. Darüber hinaus weist das Material der Lagerbuchse 12 im wesentlichen die gleiche thermische Ausdehnung auf wie der Werkstoff des Kolbens 2 und / oder des Gehäuses 4.

Das die Lagerbuchse 12 und die Stopfbuchse 4 aufnehmende Gehäuse 4 weist erfindungsgemäß eine erhebliche axiale Länge auf und ist mit einer Heizeinrichtung 16 versehen. Die Heizeinrichtung 16 enthält in vorteilhafter Weise einen Heizmantel, welcher das erfindungsgemäß lange Gehäuse 4 umgibt. Wie ersichtlich, ist zwischen der bevorzugt zylindrischen Heizeinrichtung bzw. dem Heizmantel 16 ein insbesondere ringförmiger Zwischenraum 18 vorhanden, welcher von einem beheizbaren Medium durchströmbar ist. Die Stopfbuchse 14 besitzt eine axiale Länge 20. Die Heizeinrichtung 16 besitzt eine gegenüber der Stopfbuchse 14 in besonders zweckmäßiger Weise erheblich größere axiale Länge und ragt zumindest über das eine, gemäß Zeichnung rechte Stopfbuchsenende 22 mit einer vorgegebenen Länge 24 hinaus, welche bevorzugt im Bereich zwischen 30 bis 60 mm groß ist. Auch am zweiten Stopfbuchsenende 26 überragt das Heizelement 16 jenes mit einer vorgegebenen Länge 28. Die Temperatur der Heizeinrichtung bzw. des Heizmediums im Zwischenraum 18 wird erfindungsgemäß derart vorgegeben, daß die Temperatur der Stopfbuchse zuverlässig im Flüssigbereich des das Ventil durchströmbaren Mediums liegt. Der Heizmantel 16 ist mit seinem dem Ventilkörper 8 zugeordneten Ende 30 in besonders zweckmäßiger Weise mittels einer Schweißnaht 32 mit dem Trägerflansch 6 des Gehäuses 4 verbunden. Wie ersichtlich, ist somit auch der Zwischenraum 18 erheblich länger als die Stopfbuchse 14, deren Temperatur somit zuverlässig immer im Flüssigbereich oberhalb des Schmelzpunktes des Mediums liegt.

Zwischen der Stopfbuchse 14, welche auch als Packung bezeichnet wird, und einer Druckhülse 34 bzw. Packungsdruckhülse ist ein Druckverteilerring 36 angeordnet zur gleichmäßigen Übertragung des Druckes von der Druckhülse auf die Packung. Die Druckhülse oder der Druckring 34 enthält an seinem der Stopfbuchse 14 zugewandten Ende wenigstens eine radiale Entlastungsbohrung 38, durch weiche aus der Stopfbuchse austretendes flüssiges Medium auf die Außenseite des Druckringes 34 geführt wird, wobei dort aufgrund der Wirkung der Heizeinrichtung ein frühzeitiges Einfrieren des Mediums verhindert wird. Obgleich der relativ große bzw. lange Kolben 2 viel Wärme abführt, besteht somit am Außenumfang des Druckringes 34 infolge der Beheizung nicht die Gefahr, daß das Medium einfriert. Mittels der Druckhülse 34 wird die Stopfbuchse bzw. Packung 14 gepreßt, und es wird die notwendige Vorspannung aufgebracht, um die Dichtung des Systems zu gewährleisten.

Erfindungsgemäß ragt die Druckhülse 34 derart weit in den beheizten Bereich und / oder die Heizeinrichtung 22 axial hinein, daß ein Auskühlen der Stopfbuchse 14 vermieden wird. Wie ersichtlich, ragt die Druckhülse 34 mit ihrem der Stopfbuchse 14 zugewandten Ende entsprechend der oben erläuterten vorgegebenen Länge 24 in den beheizten Bereich hinein. Da ein Wärmeverlust maßgeblich durch den Kolben des Ventils verursacht ist, ist das in den Bereich der Beheizung hineinragende Ende 40 der Druckhülse 34 von besonderer Bedeutung zur Aufrechterhaltung des flüssigen Zustandes des Mediums. Es sei an dieser Stelle festgehalten, daß die Haltbarkeit der Stopfbuchspackung maßgeblich vom Flüssigkeitszustand abhängig ist. Daher werden in vorteilhafter Weise für die Druckhülse 34 Toleranzen einerseits zur Gehäuseseite und andererseits zum Kolben vorgegeben. Die Toleranzen zur Gehäuseseite liegen im Bereich von 0,05 mm bis 0,2 mm, und vorzugsweise in der Größenordnung von 0,08 mm, um den Wärmezufluß zu gewährleisten. Die Toleranzen zwischen Druckhülse 34 und dem Kolben 2 müssen zum einen die Bewegbarkeit gewährleisten und zum anderen den Wärmeabfluß über dem Kolben 2 berücksichtigen, und jene liegen insbesondere im Bereich von 0,05 mm bis 0,4 mm, vorzugsweise in der Größenordnung um 0,1 mm.

Ferner sind in bevorzugter Weise an der Außenseite der Druckhülse 34, insbesondere axiale Entlastungsnuten 42 vorgesehen, welche zur Abführung des Mediums in axialer Richtung dienen. Die Anzahl dieser Längsnuten 42 ist im Bereich von 1 bis 8 vorgegeben, vorzugsweise zwischen 2 und 4. Da die Nuten den Wärmetransport von der Heizeinrichtung 16 behindern, ist die notwendige Anzahl zu minimieren. Des weiteren sind an der Druckfilanschseite radiale Servicenuten 44 an der Druckhülse 34 vorgesehen, welche zur Überwachung der Stopfbuchspackung 14 und / oder zum Angreifen eines Werkzeuges dienen. Anhand der letzten Nut kann entschieden werden, die Packung nachzuziehen oder zu erneuern. Hierbei sind die radialen Servicenuten von besonderer Bedeutung für die Demontierbarkeit der Druckhülse 34. Die Anzahl der radialen Nuten 44 beträgt insbesondere 2 bis 6, vorzugsweise 2 bis 4. Zur Vermeidung eines unerwünschten Wärmeabfluß ist ferner zwischen der Druckhülse 34 und einer Druckplatte 46 eine Wärmesperre 48 vorgesehen.

In bevorzugter Weise ist eine lsolierung 50 vorgesehen, welche das Ventilgehäuse zumindest im Bereich des Kolbens 2 umgibt und einen Wärmeabfluß verhindert. Damit der Wärmeabfluß über den Kolben 2, die Druckhülse bzw. den Druckring 34 sowie eine hier nicht weiter dargestelltes Haltegestänge eines Getriebes das Medium in der Stopfbuchse nicht einfrieren läßt, ist in vorteilhafter Weise auch der Arbeitsraum des Kolbens 2 mittels der Isolierung 50 umgeben. Somit läßt sich der Gefrierbereich des Mediums soweit reduzieren, daß dieser keinen störenden Einfluß auf die Bewegungskräfte ausüben kann.

Darüber hinaus ist ein Kolbenschutz 52 vorgesehen, welcher zum einen als Schmutzabweiser dient und zum anderen zur Minimierung von Wärmeverlusten vorgesehen ist. Insoweit ist bei der Fertigung auf die Vermeidung einer Kaminwirkung zu achten. Darüber hinaus ist der Kolbenschutz 52 derart ausgebildet, daß der Bewegungsteil vor auslaufendem Medium aus der Stopfbuchse geschützt wird. Ferner ist der Kolbenschutz dahingehend ausgelegt, daß der durchlaufende Mediumteil nach unten ablaufen kann. Weiterhin wird mittels des Kolbenschutzes 52 ein Berührungsschutz gewährleistet, damit sich niemand im Bewegungsteil einklemmen kann. Schließlich ist noch ein Mediumsauslauf 54 vorgesehen, welcher aus dem Bereich der Stopfbuchse 14 nach unten gerichtet angeordnet ist. Es sei festgehalten, daß in der Einbaulage des Ventils die Längsachse 10 im wesentlichen vertikal ausgerichtet ist, wobei der Mediumsauslauf 54 sich unterhalb der Stopfbuchse 14 befindet. Mittels des nach unten gerichteten Mediumsauslaufes 54 wird eine Verschmutzung des darunter liegenden Teiles der Isolierung 50 verhindert.

### Bezugszeichen

- 2: Kolben
- 4: Gehäuse
- 6: Trägerflansch
- 8: Ventilkörper
- 10: Längsachse
- 12: Lagerbuchse
- 14: Stopfbuchse
- 16: Heizeinrichtung / Heizmantel
- 18: Zwischenraum
- 20: Länge von 14
- 22: erstes Stopfbuchsenende
- 24: vorgegebene Länge von 16
- 26: zweites Stopfbuchsenende
- 28: vorgegebene Länge von 16
- 30: Ende von 16
- 32: Schweißnaht
- 34: Druckhülse / Druckring
- 36: Druckverteilerring
- 38: Entlastungsbohrung
- 40: Ende von 34
- 42: Entlastungsnut
- 44: radiale Servicenut
- 46: Druckplatte
- 48: Wärmesperre
- 50: Isolierung
- 52: Kolbenschutz
- 54: Mediumsauslauf

## Patentansprüche

1. Ventil, enthaltend einen mit einem Ventilkörper (8) verbundenen und in einem Gehäuse (4) gelagerten Kolben (2), eine zwischen dem Kolben (2) und dem Gehäuse (4) angeordnete Dichtung (14), sowie eine Heizeinrichtung (16), deren axiale Länge größer ist als die axiale Länge der Dichtung (14),
**dadurch gekennzeichnet, daß** das Gehäuse (4) im Bereich der als Stopfbuchse (14) ausgebildeten Dichtung die Heizeinrichtung (16) mit einem Heizmantel aufweist, welcher mit dem Gehäuse (4) verbunden ist und unter Bildung eines von einem beheizbaren Medium durchströmbaren Zwischenraumes (18) das Gehäuse (4) umgibt, und dass die Heizeinrichtung (16) zumindest über ein axiales Ende (22) der Stopfbuchse (14) in einer vorgegebenen Länge (24, 28) axial hinausragt.

2. Ventil nach Anspruch 1, **dadurch gekennzeichnet, daß** die axiale Länge des die Stopfbuchse (14) aufnehmenden Gehäuses (4) um einen vorgegebenen Betrag länger ist als die Länge (20) der Stopfbuchse (14).

3. Ventil nach Anspruch 1 oder 2, **dadurch gekennzeichnet, daß** ein der Stopfbuchse (14) zugeordneter und den Kolben (4) umgebender Druckring (34) mit einem Ende (40) axial in den Bereich der Heizeinrichtung (16) hineinragt.

4. Ventil nach einem der Ansprüche 1 bis 3, **dadurch gekennzeichnet, daß** der Heizmantel (16) mit einem Trägerflansch (6) des Gehäuses (4), bevorzugt mittels einer Schweißnaht (32), verbunden ist.

5. Ventil nach einem der Ansprüche 1 bis 3, **dadurch gekennzeichnet, dass** die Heizeinrichtung (16) an Stelle des Heizmantels von dem beheizbaren Medium durchströmbare Rohre oder eine elektrische Heizwicklung enthält.

6. Ventil nach einem der Ansprüche 1 bis 5, **dadurch gekennzeichnet, daß** die Lagerbuchse (12) bezüglich des Kolbens (2) und / oder bezüglich des Gehäuses (4) sehr geringe Toleranzen aufweist, und / oder daß die Toleranzen im Bereich von 0,01 mm bis 0,2 mm, vorzugsweise in der Größenordnung von 0,05 mm, vorgegeben sind.

7. Ventil nach Anspruch 6, **dadurch gekennzeichnet, daß** das Material der Lagerbuchse (12) im wesentlichen die gleiche thermische Ausdehnung wie der Kolben (2) und / oder das Gehäuse (4) aufweist, und / oder daß die Lagerbuchse (12) zumindest in ihren Grenzflächen zum Kolben (2) und / oder dem Gehäuse (4) wesentlich härter als jene ausgebildet ist.

8. Ventil nach einem der Ansprüche 1 bis 7, **dadurch gekennzeichnet, daß** ein Druckring bzw. eine Packungsdruckhülse (34), welche der Packung bzw. Stopfbuchse (14) zugeordnet sind, bezüglich des Gehäuses (4) Toleranzen im Bereich von 0,05 bis 0,2 mm, vorzugsweise in der Größenordnung von 0,08 mm, aufweisen, und / oder bezüglich des Kolbens (2) Toleranzen im Bereich von 0,05 bis 0,4 mm, vorzugsweise in der Größenordnung von 0,1 mm, aufweisen.

9. Ventil nach einem der Ansprüche 1 bis 8, **dadurch gekennzeichnet, daß** der Druckring bzw. die Packungshülse (34) an der Außenfläche wenigstens eine, insbesondere bis zu 8, vorzugsweise zwischen 2 und 4, insbesondere axiale Entlastungsnuten (42) aufweisen.

10. Ventil nach Anspruch 8 oder 9, **dadurch gekennzeichnet, daß** der Druckring bzw. die Packungsdruckhülse (34) an der der Stopfbuchse (14) abgewandten Seite wenigstens eine im wesentlichen radial angeordnete Servicenut (44) aufweist, wobei insbesondere 2 bis 6, vorzugsweise 2 bis 4, Servicenuten (44) vorgesehen sind.

11. Ventil nach einem der Ansprüche 1 bis 10, **dadurch gekennzeichnet, daß** das Gehäuse (4) zumindest im Bereich der Stopfbuchse (14) und / oder der Heizeinrichtung (16) außen mit einer Isolierung (50) versehen sind, welche vorzugsweise ferner im Bereich des Arbeitsraümes des Kolbens (2) vorgesehen ist und / oder diesen Arbeitsraum außen umgibt.

## Claims

1. Valve containing a piston (2) that is connected to a valve body (8) and mounted in a housing (4), a seal (14) arranged between the piston (2) and the housing (4), and also a heating device (16), the axial length of which is greater than the axial length of the seal (14), **characterised in that**, in the region of the seal, which is configured as a stuffing box (14), the housing (4) comprises the heating device (16) having a heating jacket, which is connected to and surrounds the housing (4), forming a gap (18) through which a heatable medium may flow, and **in that** the heating device (16) protrudes axially by a predetermined length (24, 28) at least beyond an axial end (22) of the stuffing box (14).

2. Valve according to claim 1, **characterised in that** the axial length of the housing (4) receiving the stuffing box (14) is greater by a predetermined amount than the length (20) of the stuffing box (14).

3. Valve according to either claim 1 or claim 2, **characterised in that** an end (40) of the pressure ring (34), which is associated with the stuffing box (14) and surrounds the piston (4), protrudes axially into the region of the heating device (16).

4. Valve according to any one of claims 1 to 3, **characterised in that** the heating jacket (16) is connected to a support flange (6) of the housing (4), preferably by means of a weld seam (32).

5. Valve according to any one of claims 1 to 3, **characterised in that** the heating device (16) contains pipes through which the heatable medium may flow or an electrical heating coil instead of the heating jacket.

6. Valve according to any one of claims 1 to 5, **characterised in that** the bearing bush (12) exhibits very low tolerances with respect to the piston (2) and/or with respect to the housing (4), and/or **in that** the tolerances are set in the range from 0.01 mm to 0.2 mm, preferably approximately 0.05 mm.

7. Valve according to claim 6, **characterised in that** the material of the bearing bush (12) exhibits substantially the same thermal expansion as the piston (2) and/or the housing (4), and/or **in that** the bearing bush (12) is substantially harder than the piston (2) and/or the housing (4), at least at its interfaces therewith.

8. Valve according to any one of claims 1 to 7, **characterised in that** a pressure ring or a packing pressure sleeve (34), which are associated with the packing or stuffing box (14), exhibit tolerances with respect to the housing (4) in the range from 0.05 to 0.2 mm, preferably approximately 0.08 mm, and/or tolerances with respect to the piston (2) in the range of 0.05 to 0.4 mm, preferably approximately 0.1 mm.

9. Valve according to any one of claims 1 to 8, **characterised in that** the pressure ring or the packing sleeve (34) comprises on the outer surface at least one, in particular up to eight, preferably between two and four, in particular axial, discharge grooves (42).

10. Valve according to either claim 8 or claim 9, **characterised in that** the pressure ring or the packing pressure sleeve (34) comprises at the end remote from the stuffing box (14) at least one substantially radially arranged service groove (44), in particular two to six, preferably two to four, service grooves (44) being provided.

11. Valve according to any one of claims 1 to 10, **characterised in that** the housing (4) is provided on the outside, at least in the region of the stuffing box (14) and/or the heating device (16), with insulation (50), which is preferably also provided in the region of the working space of the piston (2) and/or outwardly surrounds this working space.

## Revendications

1. Vanne comprenant un piston (2) relié à un corps (8) de vanne et monté dans un boîtier (4), un joint (14) placé entre le piston (2) et le boîtier (4), ainsi qu'un dispositif chauffant (16) dont la longueur axiale est supérieure à la longueur axiale du joint (14),
***caractérisée en ce que*** le boîtier (4) comporte, au niveau du joint conformé en presse-étoupe (14), le dispositif chauffant (16) avec une enveloppe chauffante qui est reliée au boîtier (4) et entoure le boîtier (4) en formant un interstice (18) pouvant être parcouru par un fluide qui peut être chauffé, et ***en ce que*** le dispositif chauffant (16) dépasse radialement au moins au-delà d'une extrémité axiale (22) du presse-étoupe (14) sur une longueur prédéterminée (24, 28).

2. Vanne selon la revendication 1, ***caractérisée en ce que*** la longueur axiale du boîtier (4) recevant le presse-étoupe (14) est plus long d'une quantité prédéterminée que la longueur (20) du presse-étoupe (14).

3. Vanne selon la revendication 1 ou 2, ***caractérisée en ce* qu'**une bague de pression (34) associée au presse-étoupe (14) et entourant le piston (4) rentre axialement avec une extrémité (40) au niveau du dispositif chauffant (16).

4. Vanne selon l'une quelconque des revendications 1 à 3, ***caractérisée en ce que*** l'enveloppe chauffante (16) est reliée à une bride support (6) du boîtier (4), de préférence au moyen d'un joint de soudure (32).

5. Vanne selon l'une quelconque des revendications 1 à 3, ***caractérisée en ce que*** le dispositif chauffant (16) comprend, au lieu de l'enveloppe chauffante, des tubes pouvant être parcourus par un fluide qui peut être chauffé ou un enroulement électrique chauffant.

6. Vanne selon l'une quelconque des revendications 1 à 5, ***caractérisée en ce que*** le manchon de montage (12) présente par rapport au piston (2) et/ou au boîtier (4) des tolérances très faibles, et/ou ***en ce que*** les tolérances sont prescrites dans le domaine de 0,01 mm à 0,2 mm, de préférence de l'ordre de 0,05 mm.

7. Vanne selon la revendication 6, ***caractérisée en ce que*** le matériau du manchon de montage (12) présente essentiellement la même dilatation thermique que le piston (2) et/ou le boîtier (4), et/ou ***en ce que*** le manchon de montage (12), au moins sur ses surfaces limites avec le piston (2) et/ou le boîtier (4), est sensiblement plus dur que ceux-ci.

8. Vanne selon l'une quelconque des revendications 1 à 7, ***caractérisée en ce qu'**une* bague de pression ou bien une douille de pression de garniture (34), qui sont associées à la garniture ou bien au presse-étoupe (14), présentent par rapport au boîtier (4) des tolérances comprises entre 0,05 et 0,2 mm, de préférence de l'ordre de 0,08 mm, et/ou présentent par rapport au piston (2) des tolérances comprises entre 0,05 et 0,4 mm, de préférence de l'ordre de 0,1 mm.

9. Vanne selon l'une quelconque des revendications 1 à 8, ***caractérisée en ce que*** la bague de pression ou bien la douille (34) de pression de garniture présentent sur la surface extérieure au moins une, en particulier jusqu'à 8, de manière préférée entre 2 et 4, rainures de décharge (42) en particulier axiales.

10. Vanne selon la revendication 8 ou 9, ***caractérisée en ce que*** la bague de pression ou bien la douille (34) de pression de garniture présente, du côté opposé au presse-étoupe (14), au moins une rainure de service (44) disposée pour l'essentiel radialement, les rainures de service (44) étant en particulier au nombre de 2 à 6, de manière préférée de 2 à 4.

11. Vanne selon l'une quelconque des revendications 1 à 10, ***caractérisée en ce que*** le boîtier (4) est muni à l'extérieur, au moins au niveau du presse-étoupe (14) et/ou du dispositif chauffant (16), d'une isolation (50) qui est prévue de préférence, de plus, au niveau de la chambre de travail du piston (2) et/ou qui entoure cette chambre de travail à l'extérieur.
